(19) Europäisches Patentamt / European Patent Office / Office européen des brevets

(11) **EP 3 760 455 B1**

(12) **EUROPEAN PATENT SPECIFICATION**

(45) Date of publication and mention
of the grant of the patent:
**24.05.2023 Bulletin 2023/21**

(21) Application number: **20182328.3**

(22) Date of filing: **25.06.2020**

(51) International Patent Classification (IPC):
**B60C 19/00** *(2006.01)*

(52) Cooperative Patent Classification (CPC):
**B60C 19/002**

(54) **PNEUMATIC TIRE**

**LUFTREIFEN**

**PNEUMATIQUE**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **01.07.2019 JP 2019122964**

(43) Date of publication of application:
**06.01.2021 Bulletin 2021/01**

(73) Proprietor: **Sumitomo Rubber Industries, Ltd.
Kobe-shi, Hyogo-ken 651-0072 (JP)**

(72) Inventor: **OKAMOTO, Jun
Kobe-shi, Hyogo 651-0072 (JP)**

(74) Representative: **Manitz Finsterwald
Patent- und Rechtsanwaltspartnerschaft mbB
Martin-Greif-Strasse 1
80336 München (DE)**

(56) References cited:
**WO-A1-2017/163219          WO-A1-2017/170154
DE-A1-102014 206 009     DE-A1-102016 212 473
JP-A- 2016 043 824**

**Description**

BACKGROUND OF THE INVENTION

Field of the Invention

The present invention relates to a pneumatic tire.

Description of the Background Art

In recent years, a technology has been proposed in which a long band-shaped sound-damping body composed of a sponge material or the like is mounted on the tread inner surface of a pneumatic tire along the tire circumferential direction, thereby inhibiting cavity resonance in the inner cavity of the tire to reduce road noise. As a method for mounting the sound-damping body, a method using a double-sided tape, a synthetic rubber-based adhesive in which chloroprene rubber or the like is dissolved in an organic solvent, or the like has been proposed.

However, in order to sufficiently bond the sound-damping body to the tread inner surface, it is not enough to merely use the adhesive or the like, and a method of buffing the tread inner surface to flatten an uneven pattern and increase the bonding area, or the like, is used. However, buffing requires time and labor, resulting in various problems such as reduced work efficiency, excessive reduction of the thickness of an inner liner rubber layer forming the inner cavity surface of the tire, and impaired air tightness of the tire (see International Publication No. WO2003/103989 and Japanese Laid-Open Patent Publication No. 2003-063208).

DE 10 2016 212473 A1 discloses a pneumatic tire comprising a dampening body for reducing noise. The dampening body is attached to the tire via a sealant layer. The sealant layer has a first thickness at a section where it is not covered by the dampening body and a second thickness at a section where it is covered by the dampening body.

Further self-sealing tires comprising a noise reducing material are described in WO 2017/163219 A1 and in DE 10 2014 206009 A1.

Noise reduction devices for reducing cavernous resonance generated in a pneumatic tire are disclosed in WO 2017/170154 A1 and in JP 2016 043824 A.

The present invention has been made to solve the above problems, and an object of the present invention is to provide a pneumatic tire having improved resistance to peeling of a sound-damping body.

SUMMARY OF THE INVENTION

The present invention is directed to a pneumatic tire including a sound-damping body fixed to a tire inner cavity surface by a fixing layer, wherein a thickness of the fixing layer is not uniform and is made appropriate in a tire width direction, thereby improving resistance to peeling of the sound-damping body.

In the pneumatic tire of the present invention, thicknesses $Ta$ and $Tb$ of end-adjacent portions in the tire width direction of the fixing layer and a thickness $Tc$ of a center portion of the fixing layer satisfy the following formulas (1), (2), and (3).

$$(1)\ Ta < Tc$$

$$(2)\ Tb < Tc$$

$$(3)\ Ta/Tb = 0.25 \text{ to } 4.00$$

Further, in the pneumatic tire of the present invention, the thicknesses $Ta$ and $Tb$ of the end-adjacent portions of the fixing layer are 0.10 to 1.50 mm and the thickness $Tc$ of the center portion is 0.50 to 2.50 mm. The end-adjacent portions and the center portion, when, in a width $W1$ in the tire width direction of the fixing layer from one end to another end, a position, corresponding to k% of the width $W1$, from the one end is defined as $Tk$, the end-adjacent portions of the fixing layer are a portion from $T0$ to $T25$ and a portion from $T75$ to $T100$, respectively, and the center portion of the fixing layer is a portion from $T25$ to $T75$, and wherein the thicknesses $Ta$ and $Tb$ of the end-adjacent portions of the fixing layer are the averages of the thicknesses in ranges $T0$ to $T25$ and $T75$ to $T100$, respectively, and the thickness $Tc$ of the center portion is the average of the thicknesses in the range $T25$ to $T75$

In the pneumatic tire, the following formulas (1-1), (2-1), and (3-1) are preferably satisfied.

$$(1\text{-}1)\ Ta/Tc = 0.10 \text{ to } 0.70$$

$$(2\text{-}1)\ Tb/Tc = 0.10 \text{ to } 0.70$$

$$(3\text{-}1)\ Ta/Tb = 0.50 \text{ to } 2.00$$

In the pneumatic tire, the following formulas (1-2), (2-2), and (3-2) are preferably satisfied.

$$(1\text{-}2)\ Ta/Tc = 0.30 \text{ to } 0.50$$

$$(2\text{-}2)\ Tb/Tc = 0.30 \text{ to } 0.50$$

$$(3\text{-}2)\ Ta/Tb = 0.80 \text{ to } 1.25$$

According to the present invention, the pneumatic tire includes a sound-damping body fixed to a tire inner cavity surface by a fixing layer, and a thickness of the fixing layer is not uniform and is made appropriate in a tire width direction, thereby improving resistance to peeling of the sound-damping body. Thus, it is possible to provide a pneumatic tire having improved resistance to peeling of a sound-damping body.

BRIEF DESCRIPTION OF THE DRAWINGS

FIG. 1 is a cross-sectional view showing a pneumatic tire according to an embodiment;
FIG. 2 is a cross-sectional view in a circumferential direction taken along the tire equator of the pneumatic tire;
FIG. 3 is a partially enlarged cross-sectional view showing a fixed portion of a sound-damping body in an enlarged manner; and
FIG. 4 is a cross-sectional view showing another cross-sectional shape of the sound-damping body.

DESCRIPTION OF THE PREFERRED EMBODIMENTS

The present invention is directed to a pneumatic tire including a sound-damping body fixed to a tire inner cavity surface by a fixing layer, wherein a thickness of the fixing layer is not uniform and is made appropriate in a tire width direction, thereby improving resistance to peeling of the sound-damping body.
The reason why the effect of improving the resistance to peeling of the sound-damping body is obtained is inferred as described below.
In the actual running mode of a vehicle, when, for example, the tire passes over a projection so that strain is applied to the tire, the sound-damping body attached to the tire inner cavity also undergoes the strain following the shape change of the inner surface of the tire. A conventional sound-damping body is conventionally attached with a uniform thickness in the tire width direction by a double-sided tape, a pressure-sensitive adhesive, an adhesive, or the like. However, in this case, stress is easily concentrated on an end portion of the adhesive or the like, and thus a phenomenon of peeling of the sound-damping body from the end portion is often observed.
In this regard, the present inventors have found that a pressure-sensitive adhesive or the like exhibits a larger peeling resistance as the film thickness thereof becomes smaller unless the film thickness is extremely small enough to cause interface destruction, and also have found that peeling, due to repeated strain, of a sound-damping body such as a sponge attached to the tire inner cavity often occurs starting from an edge portion in the tire width direction. Based on these findings, the present inventors have found that for a sound-damping body fixed to a tire inner cavity surface by a fixing layer (adhesive, or the like), resistance to peeling of the sound-damping body can be improved by making the thickness of the fixing layer appropriate in the tire width direction, resulting in completion of the present invention. Therefore, it is inferred that the resistance to peeling of the sound-damping body can be improved by making the thickness of the fixing layer appropriate in the tire width direction by a method in which the thickness of the fixing layer for fixing the sound-damping body is adjusted to be relatively small at an end portion in the tire width direction to increase the peeling resistance with respect to a peeling starting point in an edge portion where stress is particularly easily concentrated.

Hereinafter, an embodiment of the present invention will be described in detail.

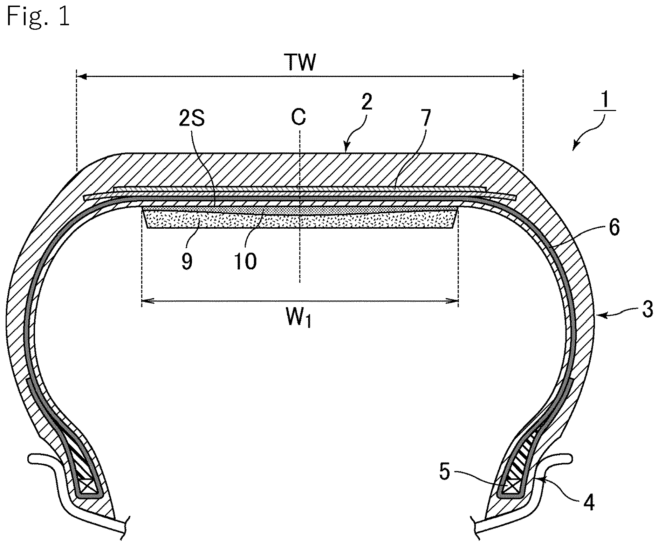

In FIG. 1, a pneumatic tire 1 according to the present embodiment includes a sound-damping body 9 having an outer peripheral surface bonded to a tread inner surface 2S of the pneumatic tire 1 by a fixing layer 10 and extending in the tire circumferential direction.

The pneumatic tire 1 is a tubeless tire, and includes a tread portion 2, a pair of sidewall portions 3 extending inward in the tire radial direction from both end portions of the tread portion 2, and bead portions 4 located at the inner ends of the respective sidewall portions 3. The tire inner cavity surface of the pneumatic tire 1 is covered with an inner liner rubber (not shown) formed from a rubber having low air permeability. As the pneumatic tire 1, various tires can be used regardless of the internal structure or category. A tire for a passenger car, which is strongly required to provide quietness inside a vehicle, particularly a radial tire for a passenger car having an aspect ratio of 60% or less, is preferably used.

The pneumatic tire 1 is reinforced by a tire cord layer that includes a carcass 6 extending between and on the bead portions 4 and a belt layer 7 disposed radially outward of the carcass 6 and within the tread portion 2. The carcass 6 is formed from, for example, one or more carcass plies in which organic fiber cords are arranged at a predetermined angle (70 to 90°, etc.) relative to the tire circumferential direction, and is formed from one carcass ply in this example. Both end portions of the carcass ply are turned up around bead cores 5. The belt layer 7 is formed from, for example, a plurality of belt plies in which steel cords are arranged at a predetermined angle (10 to 40°, etc.) relative to the tire circumferential direction, and is formed from two belt plies in this example. The belt layer 7 has belt stiffness enhanced by the steel cords of the plies intersecting each other, and thus firmly reinforces the tread portion 2 with a hoop effect.

As the sound-damping body 9, for example, a body composed of a sponge material having a band shape that is long in the tire circumferential direction is suitable for use. The sound-damping body 9 is, for example, fixed to the tread inner surface 2S (tire inner cavity surface) in the tire circumferential direction along a tire equator C via the fixing layer 10.

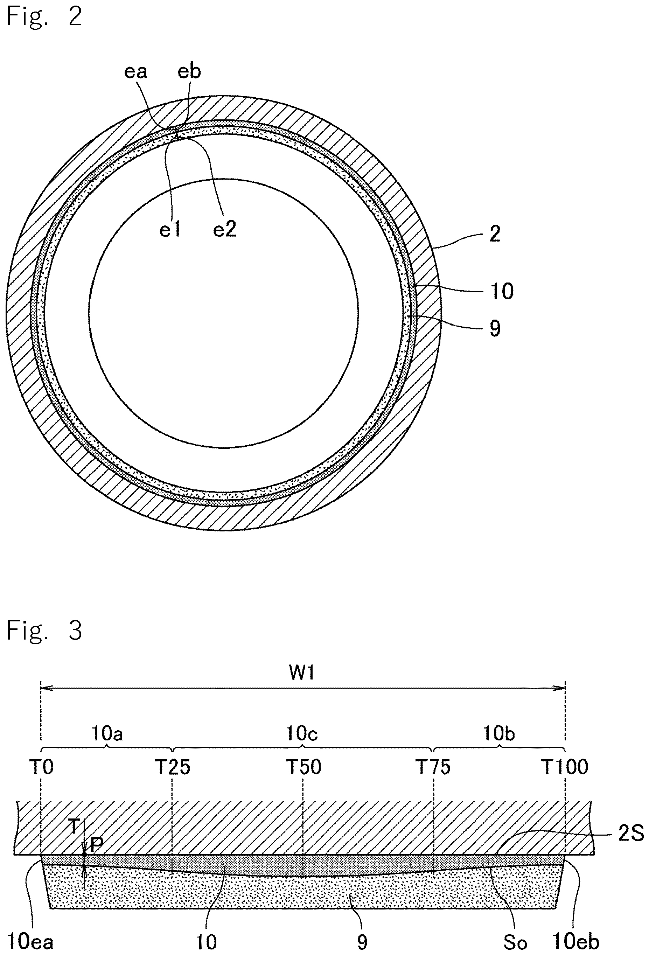

In this example, the case where one end e1 and another end e2, in the circumferential direction, of the sound-damping body 9 are butted against each other, that is, the sound-damping body 9 is formed continuously in an annular shape, as shown in FIG. 2, is illustrated. The one end e1 and the other end e2 may be spaced apart from each other in the circumferential direction. In such a case, in order to reduce the influence on the weight balance and prevent deterioration of the tire uniformity, the length, in the circumferential direction, of the space between these ends is preferably not greater than 100 mm and further preferably not greater than 80 mm. In addition, similar to the sound-damping body 9, the case where the fixing layer 10 formed along the sound-damping body 9 is formed continuously in an annular shape in which one end ea and another end eb thereof in the circumferential direction are butted against each other, is illustrated. Similarly, the one end ea and the other end eb may be spaced apart from each other in the circumferential direction, and the length of the space therebetween is also preferably in the same range.

As the sponge material, a material having a specific gravity of 0.005 to 0.060 is preferably used from the viewpoint of reducing the cavity resonance energy in terms of a pore ratio and the like. In addition, a material having a sponge hardness of 5.0 to 500 N or a tensile strength of 10.0 to 1000 kPa is suitable. When the sponge hardness is limited, an appropriate elongation is ensured for the sound-damping body 9. This elongation serves to widely disperse stress when strain is applied to the sound-damping body 9. In particular, the sponge hardness is preferably not less than 80 N and further preferably not less than 90 N, and the upper limit thereof is preferably not greater than 150 N, more preferably not greater than 130 N, and further preferably not greater than 1 10 N. When the tensile strength of the sponge material is limited, the strength against the stress is further enhanced. In particular, the tensile strength of the sponge material is preferably not less than 120 kPa and further preferably not less than 130 kPa, and the upper limit thereof is not particularly limited, but, from the viewpoint of cost, productivity, availability in the market, etc., the upper limit is preferably not greater than 160 kPa and further preferably not greater than 150 kPa.

The sponge hardness is defined as a value measured according to Method A (Section 6.3) in the measurement methods for "hardness" at Section 6 specified in JIS K6400 "Test methods for flexible polyurethane foam". The tensile strength of the sponge is defined as a value measured on a No. 1 dumbbell-shaped test piece according to "Tensile strength and elongation" at Section 10 of the same JIS.

As the sponge material, synthetic resin sponges such as ether-based polyurethane sponges, ester-based polyurethane sponges, and polyethylene sponges, and rubber sponges such as chloroprene rubber sponges (CR sponges), ethylene-propylene rubber sponges (EPDM sponges), and nitrile rubber sponges (NBR sponges) are suitable for use. Among them, polyurethane sponges including ether-based polyurethane sponges are preferable from the viewpoint of sound-damping properties, lightness, foam controllability, durability, or the like.

As shown in a partially enlarged cross-sectional view of FIG. 3 showing a fixed portion of the sound-damping body 9 in an enlarged manner, an outer peripheral surface So of the sound-damping body 9 is fixed to the tread inner surface 2S by the fixing layer 10. The fixing layer 10 is not particularly limited as long as the fixing layer 10 can fix the sound-damping body 9 to the tread inner surface 2S. The fixing layer 10 is formed, for example, by a pressure-sensitive adhesive, an adhesive, a double-sided tape, or the like. Since the sound-damping body 9 is fixed to the tread inner surface 2S (tire inner cavity surface) along the tire circumferential direction, the sound-damping body 9 is inhibited from freely moving in the tire inner cavity during running and prevented from being damaged, and an effect of inhibiting resonance is stably exhibited. In particular, from the viewpoint of mountability to a rim, etc., the sound-damping body 9 is preferably fixed to the tire inner cavity surface, particularly the tread inner surface 2S. The tread inner surface 2S means a surface, in the tire inner cavity surface, located on the tread portion 2 which comes into contact with a road surface. In the present description, the tread inner surface 2S includes at least a width region TW (tread ground-contact width) in the tire axial direction where the belt layer 7 is disposed. In a particularly preferable mode, the sound-damping body 9 is mounted such that the width center thereof is located on the tire equator C.

Here, the tread ground-contact width TW means the maximum width in the tire axial direction of a ground-contact surface that comes into contact with the ground when a normal load is applied to a tire in a state where the tire is mounted on a normal rim and inflated to a normal internal pressure. The "normal rim" is a rim that is defined, in a standard system including a standard on which the tire is based, by the standard for each tire, and means, for example, the standard rim in the JATMA standard, the "Design Rim" in the TRA standard, or the "Measuring Rim" in the ETRTO standard. The "normal internal pressure" is an air pressure that is defined by the standard for each tire, and means the maximum air pressure in the JATMA standard, the maximum value indicated in the table "TIRE LOAD LIMITS AT VARIOUS COLD INFLATION PRESSURES" in the TRA standard, or the "INFLATION PRESSURE" in the ETRTO standard. In the case of a tire for a passenger car, the "normal internal pressure" is 180 kPa. The "normal load" is a load that is defined by the standard for each tire, and is the maximum load capacity in the JATMA standard, the maximum value indicated in the table "TIRE LOAD LIMITS AT VARIOUS COLD INFLATION PRESSURES" in the TRA standard, or the "LOAD CAPACITY" in the ETRTO standard.

A width W1 in the tire axial direction of the sound-damping body 9 (equal to a width W1 in the tire width direction of the fixing layer 10 in the example of FIG. 1) is preferably in the range of 80 to 120% of the tread ground-contact width TW. The lower limit of the width W1 is more preferably not less than 90% of the tread ground-contact width TW, and the upper limit of the width W1 is more preferably not greater than 110% of the tread ground-contact width TW.

From the viewpoint of a sound-damping effect, the lower limit of the thickness of the sound-damping body 9 (the thickness of the entirety of the sound-damping body 9) is preferably not less than 5.0 mm and more preferably not less than 7.0 mm. From the viewpoint of preventing unnecessary increase in cost and mass, the upper limit of the thickness is preferably not greater than 40.0 mm and more preferably not greater than 30.0 mm. The thicknesses of the sound-damping body 9 at predetermined points are measured along normal lines at these points, and the thickness of the sound-damping body 9 (the thickness of the entirety of the sound-damping body 9) is the average of the thicknesses at the respective points.

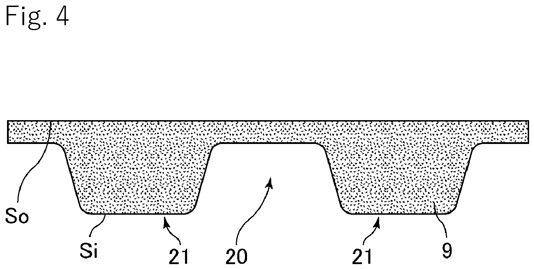

In this example, a rectangular shape is illustrated as a cross-sectional shape, of the sound-damping body 9, perpendicular to the longitudinal direction thereof, but various shapes such as a trapezoidal shape, a triangular shape, and a semicircular shape can be adopted. Among them, as shown in FIG. 4, by providing one or more circumferential grooves 20 on an inner peripheral surface Si of the sound-damping body 9, mountain-shaped projections 21 are preferably formed at both sides of each circumferential groove 20. Such a sound-damping body 9 can have a surface area increased due to unevenness by the circumferential groove 20 and the projections 21, and thus can exhibit a higher sound-damping effect. In addition, the increased surface area improves the heat dissipation of the sound-damping body 9 and also serves to prevent thermal destruction or the like of the sound-damping body 9 itself.

Examples of pressure-sensitive adhesives and adhesives that can be used for the fixing layer 10 include inorganic pressure-sensitive adhesives (adhesives) and organic pressure-sensitive adhesives (adhesives). Examples of the inorganic pressure-sensitive adhesives (adhesives) include sodium silicate, cement, and ceramics. Examples of the organic pressure-sensitive adhesives (adhesives) include natural and synthetic (thermoplastic resin-based, thermosetting resin-based, elastomer-based, etc.) pressure-sensitive adhesives (adhesives). Examples of the natural pressure-sensitive adhesives (adhesives) include starch-based, protein-based, and natural rubber-based pressure-sensitive adhesives (adhesives), and asphalt. Examples of the thermoplastic resin-based pressure-sensitive adhesives (adhesives) include vinyl acetate resin-based, polyvinyl acetal-based, ethylene vinyl acetate resin-based, vinyl chloride resin-based, acrylic resin-based (acrylic acid esters such as butyl acrylate), polyamide-based, cellulose-based, and $\alpha$-olefin-based pressure-sensitive adhesives (adhesives). Examples of the thermosetting resin-based pressure-sensitive adhesives (adhesives) include urea resin-based, melamine resin-based, phenol resin-based, resorcinol resin-based, epoxy resin-based, structural acrylic resin-based, polyester-based, and polyaromatic-based pressure-sensitive adhesives (adhesives). Examples of the elastomer-based pressure-sensitive adhesives (adhesives) include chloroprene-based, nitrile rubber-based, styrene-butadiene rubber-based, polysulfide-based, isobutylene-isoprene-rubber-based, silicone rubber-based, acrylic rubber-based, modified silicone rubber-based, urethane rubber-based, silylated urethane resin-based, telechelic polyacrylate-based, and cyanoacrylate-based pressure-sensitive adhesives (adhesives).

As a double-sided tape that can be used for the fixing layer 10, for example, a tape having a pressure-sensitive adhesive layer (adhesive layer) provided on one surface and another surface of a flexible base sheet can be used. As the base sheet, for example, plastic films made of polyethylene, polypropylene, polyvinyl chloride, polyester (polyethylene terephthalate, etc.), and the like, rayon, pulp, synthetic fibers, woven fabrics, non-woven fabrics, cotton fabrics, foam material sheets (acrylic foam using a foaming agent, etc.) made of acrylate and plastic, metals (aluminum, copper, etc.), etc., are suitably used. The pressure-sensitive adhesive layer (adhesive layer) can be formed using the pressure-sensitive adhesive or adhesive.

The outer peripheral surface So of the sound-damping body 9 is fixed to the tread inner surface 2S via the fixing layer 10 produced by such a pressure-sensitive adhesive or the like. As shown in FIG. 3, in fixing via the fixing layer 10, for example, a method in which thicknesses Ta and Tb of end-adjacent portions 10a and 10b in the tire width direction of the fixing layer 10 are adjusted so as to be relatively small as compared to a thickness Tc of a center portion 10c of the fixing layer 10 is adopted to make the thickness of the fixing layer 10 appropriate in the tire width direction, whereby the resistance to peeling of the sound-damping body 9 can be improved.

Regarding the end-adjacent portions 10a and 10b and the center portion 10c, as shown in FIG. 3, when, in the width W1 in the tire width direction of the fixing layer 10 (a width from one end 10ea to another end 10eb), a position, corresponding to k% of W1, from the one end 10ea is defined as Tk, the end-adjacent portions 10a and 10b of the fixing layer 10 are a portion from T0 (0% position) to T25 (25% position) and a portion from T75 (75% position) to T100 (100% position), respectively. The center portion 10c of the fixing layer 10 is a portion from T25 to T75. The positions T25 and T75 correspond to the center portion 10c and do not correspond to the end-adjacent portions 10a and 10b.

Regarding the thickness, both arrows T in FIG. 3 represent a thickness T of the fixing layer 10 at a point P, and the thickness T is measured along a line normal to the tread inner surface 2S at the point P. For example, T0, T50, and T100 are measured along lines normal to the tread inner surface 2S at points corresponding to 0%, 50%, and 100% of the width W 1, respectively. In addition, a thickness of the fixing layer 10 in a predetermined width in the tire width direction is the average of the thicknesses in the predetermined width. For example, the thicknesses Ta and Tb of the end-adjacent portions 10a and 10b of the fixing layer 10 are the averages of the thicknesses in ranges indicated by 10a and 10b in FIG. 3, respectively, and the thickness Tc of the center portion 10c is the average of the thicknesses in a range indicated by 10c in FIG. 3. The thickness of the fixing layer in the case where a double-sided tape is used is the total thickness of a base sheet and a pressure-sensitive adhesive layer (adhesive layer), and the thickness of the fixing layer in the case where a pressure-sensitive adhesive or an adhesive is used is the thickness of a pressure-sensitive adhesive layer or adhesive layer formed by the adhesive.

From the viewpoint of the resistance to peeling of the sound-damping body 9, the thicknesses Ta and Tb of the end-adj acent portions 10a and 10b of the fixing layer 10 and the thickness Tc of the center portion 10c of the fixing layer 10 preferably satisfy the following formulas (1), (2), and (3).

$$(1)\ Ta < Tc$$

$$(2)\ Tb < Tc$$

$$(3)\ Ta/Tb = 0.25\ to\ 4.00$$

As for formula (1), (1-1) Ta/Tc = 0.10 to 0.70 is preferable, and (1-2) Ta/Tc = 0.30 to 0.50 is more preferable. As for formula (2), (2-1) Tb/Tc = 0.10 to 0.70 is preferable, and (2-2) Tb/Tc = 0.30 to 0.50 is more preferable. As for formula (3), (3-1) Ta/Tb = 0.50 to 2.00 is preferable, and (3-2) Ta/Tb = 0.80 to 1.25 is more preferable.

Moreover, from the viewpoint of the resistance to peeling of the sound-damping body 9, the position T5, corresponding to 5% of W1, from the one end 10ea, the position T50, corresponding to 50% of W1, from the one end 10ea, and the position T95, corresponding to 95% of W1, from the one end 10ea preferably satisfy T5 < T50, T95 < T50, and T5/T95 = 0.25 to 4.00, more preferably satisfy T5/T50 = 0.10 to 0.70, T95/T50 = 0.10 to 0.70, and T5/T95 = 0.50 to 2.00, and further preferably satisfy T5/T50 = 0.30 to 0.50, T95/T50 = 0.30 to 0.50, and T5/T95 = 0.80 to 1.25.

From the viewpoint of the resistance to peeling of the sound-damping body 9, the thicknesses Ta and Tb of the end-adjacent portions 10a and 10b of the fixing layer 10 are 0.10 to 1.50 mm and more preferably 0.50 to 1.00 mm. From the viewpoint of the resistance to peeling of the sound-damping body 9, the thickness Tc of the center portion 10c is 0.50 to 2.50 mm and more preferably 1.00 to 2.00 mm. T5 and T95 are preferably in the same range as Ta and Tb, and T50 is preferably in the same range as Tc.

Although the particularly preferred embodiment of the present invention has been described in detail above, the present invention is not limited to the above-described embodiment, and various modifications can be made to practice the present invention as defined by the claims.

EXAMPLES

The present invention will be specifically described based on examples. However, the present invention is not limited to these examples.

In order to confirm the advantageous effects of the present invention, pneumatic tires (tire size: 215/60R16) each including a sound-damping body were produced as test tires according to specifications shown in each table, and each test tire was tested for resistance to peeling (durability). As for the specifications of the fixing layer, the fixing layer was a layer formed by a pressure-sensitive adhesive (adhesive) in Table 1, and was a double-sided tape including a base sheet and a pressure-sensitive adhesive (adhesive) in Table 2. Reference comparative examples in Tables 1 and 2 are Comparative Examples 1-1 and 1-2, respectively.

[Specifications, etc., of Sound-Damping Body]

Material of sound-damping body: an ether-based polyurethane sponge ("E16", manufactured by MARUSUZU CO., LTD.)
Specific gravity of sound-damping body: 0.016
Sponge hardness: 5.0 to 500 N
Tensile strength: 10.0 to 1000 kPa
Cross-sectional shape of sponge: a horizontally long rectangular shape of 150 mm wide × 10 mm thick
(tread ground-contact width TW = 150 mm)

[Specifications of Fixing Layer]

Pressure-sensitive adhesive (adhesive): an acrylic emulsion adhesive (acrylic resin-based adhesive)
Double-sided tape: polyethylene (base sheet), an acrylic emulsion adhesive (acrylic resin-based adhesive)
Width of fixing layer: a width equal to the width of the sponge
Thickness: specifications in each table

1. Resistance to Peeling (Durability)

A tire endurance test was conducted. In the test, each test tire inflated with air to a predetermined internal pressure was pressed at a predetermined load against a drum having a plurality of projections on a smooth surface, and the drum was rotated at a predetermined speed, whereby the test tire freely rolled but certain strain was repeatedly applied to the tire by the projections on the drum. Peeling and destruction behavior of the sponge in the tire inner cavity were checked by monitoring the inner cavity per predetermined running distance, and the running distance until the sponge (sound-damping body) peeled off was measured. The running distance of each test tire is indicated as an index with the running distance of the corresponding reference comparative example being regarded as 100. A higher index means that the durability (resistance to peeling) is better.

[Table 1]

| Pressure-sensitive adhesive (adhesive) | | | Comparative Example | Example | | | | | | | | |
|---|---|---|---|---|---|---|---|---|---|---|---|---|
| | | | 1-1 | 1-1 | 1-2 | 1-3 | 1-4 | 1-5 | 1-6 | 1-7 | 1-8 | 1-9 |
| Thickness of pressure-sensitive adhesive (adhesive) (mm) | Ta/Tc | | 1.00 | 0.70 | 0.10 | 0.30 | 0.20 | 0.50 | 0.30 | 0.40 | 0.10 | 0.25 |
| | Tb/Tc | | 1.00 | 0.70 | 0.10 | 0.70 | 0.10 | 0.50 | 0.30 | 0.50 | 0.25 | 0.10 |
| | Ta/Tb | | 1.00 | 1.00 | 1.00 | 0.43 | 2.00 | 1.00 | 1.00 | 0.80 | 0.40 | 2.53 |
| | Ta (mm) | | 1.00 | 0.70 | 0.10 | 0.45 | 0.20 | 0.50 | 0.36 | 0.48 | 0.10 | 0.38 |
| | Tb (mm) | | 1.00 | 0.70 | 0.10 | 1.05 | 0.10 | 0.50 | 0.36 | 0.60 | 0.25 | 0.15 |
| | Tc (mm) | | 1.00 | 1.00 | 1.00 | 1.50 | 1.00 | 1.00 | 1.20 | 1.20 | 1.00 | 1.50 |
| | T5/T50 | | 1.00 | 0.70 | 0.10 | 0.30 | 0.20 | 0.50 | 0.30 | 0.40 | 0.10 | 0.25 |
| | T95/T50 | | 1.00 | 0.70 | 0.10 | 0.70 | 0.10 | 0.50 | 0.30 | 0.50 | 0.25 | 0.10 |
| | T5/T95 | | 1.00 | 1.00 | 1.00 | 0.43 | 2.00 | 1.00 | 1.00 | 0.80 | 0.40 | 2.53 |
| | T5 (mm) | | 1.00 | 0.70 | 0.10 | 0.45 | 0.20 | 0.50 | 0.36 | 0.48 | 0.10 | 0.38 |
| | T95 (mm) | | 1.00 | 0.70 | 0.10 | 1.05 | 0.10 | 0.50 | 0.36 | 0.60 | 0.25 | 0.15 |
| | T50 (mm) | | 1.00 | 1.00 | 1.00 | 1.50 | 1.00 | 1.00 | 1.20 | 1.20 | 1.00 | 1.50 |
| Resistance to peeling (durability) | | | 100 | 134 | 133 | 138 | 135 | 172 | 192 | 222 | 160 | 131 |

[Table 2]

| Double-sided tape | | | Comparative Example | Example | | | | | | | | |
|---|---|---|---|---|---|---|---|---|---|---|---|---|
| | | | 2-1 | 2-1 | 2-2 | 2-3 | 2-4 | 2-5 | 2-6 | 2-7 | 2-8 | 2-9 |
| Thickness of double-sided tape (mm) | Ta/Tc | | 1.00 | 0.70 | 0.10 | 0.30 | 0.20 | 0.50 | 0.30 | 0.40 | 0.10 | 0.25 |
| | Tb/Tc | | 1.00 | 0.70 | 0.10 | 0.70 | 0.10 | 0.50 | 0.30 | 0.50 | 0.25 | 0.10 |
| | Ta/Tb | | 1.00 | 1.00 | 1.00 | 0.43 | 2.00 | 1.00 | 1.00 | 0.80 | 0.40 | 2.53 |
| | Ta (mm) | | 1.00 | 0.70 | 0.10 | 0.45 | 0.20 | 0.50 | 0.36 | 0.48 | 0.10 | 0.38 |
| | Tb (mm) | | 1.00 | 0.70 | 0.10 | 1.05 | 0.10 | 0.50 | 0.36 | 0.60 | 0.25 | 0.15 |
| | Tc (mm) | | 1.00 | 1.00 | 1.00 | 1.50 | 1.00 | 1.00 | 1.20 | 1.20 | 1.00 | 1.50 |
| | T5/T50 | | 1.00 | 0.70 | 0.10 | 0.30 | 0.20 | 0.50 | 0.30 | 0.40 | 0.10 | 0.25 |
| | T95/T50 | | 1.00 | 0.70 | 0.10 | 0.70 | 0.10 | 0.50 | 0.30 | 0.50 | 0.25 | 0.10 |
| | T5/T95 | | 1.00 | 1.00 | 1.00 | 0.43 | 2.00 | 1.00 | 1.00 | 0.80 | 0.40 | 2.53 |
| | T5 (mm) | | 1.00 | 0.70 | 0.10 | 0.45 | 0.20 | 0.50 | 0.36 | 0.48 | 0.10 | 0.38 |
| | T95 (mm) | | 1.00 | 0.70 | 0.10 | 1.05 | 0.10 | 0.50 | 0.36 | 0.60 | 0.25 | 0.15 |
| | T50 (mm) | | 1.00 | 1.00 | 1.00 | 1.50 | 1.00 | 1.00 | 1.20 | 1.20 | 1.00 | 1.50 |

(continued)

| Double-sided tape | | | | | | | | | | |
|---|---|---|---|---|---|---|---|---|---|---|
| | Comparative Example | Example | | | | | | | | |
| | 2-1 | 2-1 | 2-2 | 2-3 | 2-4 | 2-5 | 2-6 | 2-7 | 2-8 | 2-9 |
| Resistance to peeling (durability) | 100 | 128 | 127 | 131 | 129 | 164 | 183 | 211 | 152 | 125 |

As seen from each table, regarding the sound-damping body fixed by the fixing layer formed by using the pressure-sensitive adhesive (adhesive) or the double-sided adhesive tape, the tires in which the thicknesses Ta and Tb of the end-adjacent portions of the fixing layer were smaller than the thickness Tc of the center portion of the fixing layer, particularly the tires adjusted to satisfy the ranges in claims 3 and 4 had excellent durability (resistance to peeling). In addition, the sound-damping property was also good.

Moreover, similar effects (resistance to peeling, quietness) were also obtained when fixing layers were formed by using other pressure-sensitive adhesives (adhesives) such as the above-described inorganic or organic pressure-sensitive adhesives (adhesives), and when double-sided tapes (fixing layers) including the above-described other base sheets made of polyethylene, polypropylene, and the like and the above-described other pressure-sensitive adhesives (adhesives) were formed.

REFERENCE SIGNS LIST

1: pneumatic tire,
2: tread portion
3: sidewall portion
4: bead portion
5: bead core
6: carcass
7: belt layer
9: sound-damping body
10: fixing layer
10a, 10b: the end-adjacent portions in the tire width direction of the fixing layer
10c: the center portion in the tire width direction of the fixing layer
10ea: one end of the fixing layer in the tire width direction
10eb, another end of the fixing layer in the tire width direction
20: circumferential groove
21: mountain-shaped projections
2S: tread inner surface (tire inner cavity surface)
So: outer peripheral surface of the sound-damping body
C: tire equator
e1: one end of the sound-damping body in the circumferential direction
e2: another end of the sound-damping body in the circumferential direction
ea: one end of the fixing layer in the circumferential direction
eb: another end of the fixing layer in the circumferential direction
TW: tread ground-contact width
Si: inner peripheral surface of the sound-damping body
W1: width of the fixing layer in the tire width direction
T: thickness of the fixing layer at a point P

**Claims**

1.  A pneumatic tire (1) comprising a sound-damping body (9) fixed to a tire inner cavity surface (2S) by a fixing layer (10), wherein

a thickness of the fixing layer (10) is not uniform and is made appropriate in a tire width direction, thereby improving resistance to peeling of the sound-damping body (9), wherein thicknesses (Ta, Tb) of end-adjacent portions (10a, 10b) in the tire width direction of the fixing layer (10) and a thickness (Tc) of a center portion (10c) of the fixing layer (10) satisfy the following formulas (1), (2), and (3),

$$(1)\ Ta < Tc$$

$$(2)\ Tb < Tc$$

$$(3)\ Ta/Tb = 0.25\ to\ 4.00,$$

**characterized in that**
the thicknesses (Ta, Tb) of the end-adjacent portions (10a, 10b) of the fixing layer 10 are 0.10 to 1.50 mm and the thickness (Tc) of the center portion (10c) is 0.50 to 2.50 mm,
wherein the end-adjacent portions (10a, 10b) and the center portion (10c), when, in a width (W1) in the tire width direction of the fixing layer (10) from one end (10ea) to another end (10eb), a position, corresponding to k% of the width (W1), from the one end (10ea) is defined as Tk, the end-adjacent portions (10a, 10b) of the fixing layer (10) are a portion from T0 to T25 and a portion from T75 to T100, respectively, and the center portion (10c) of the fixing layer (10) is a portion from T25 to T75, and wherein
the thicknesses (Ta, Tb) of the end-adjacent portions (10a, 10b) of the fixing layer (10) are the averages of the thicknesses in ranges T0 to T25 and T75 to T100, respectively, and the thickness (Tc) of the center portion (10c) is the average of the thicknesses in the range T25 to T75.

2. The pneumatic tire (1) according to claim 1, wherein the following formulas (1-1), (2-1), and (3-1) are satisfied,

$$(1-1)\ Ta/Tc = 0.10\ to\ 0.70$$

$$(2-1)\ Tb/Tc = 0.10\ to\ 0.70$$

$$(3-1)\ Ta/Tb = 0.50\ to\ 2.00.$$

3. The pneumatic tire (1) according to claim 1, wherein the following formulas (1-2), (2-2), and (3-2) are satisfied,

$$(1-2)\ Ta/Tc = 0.30\ to\ 0.50$$

$$(2-2)\ Tb/Tc = 0.30\ to\ 0.50$$

$$(3-2)\ Ta/Tb = 0.80\ to\ 1.25.$$

**Patentansprüche**

1. Luftreifen (1), der einen schalldämpfenden Körper (9) umfasst, der durch eine Befestigungsschicht (10) an einer Reifeninnenhohlraum-Oberfläche (2S) befestigt ist, wobei

eine Dicke der Befestigungsschicht (10) nicht gleichmäßig ist und in einer Reifenbreitenrichtung geeignet eingerichtet ist, wodurch ein Widerstand gegen Abschälen des schalldämpfenden Körpers (9) verbessert ist, wobei Dicken (Ta, Tb) von zu den Enden benachbarten Abschnitten (10a, 10b) in der Reifenbreitenrichtung der Befestigungsschicht (10) und eine Dicke (Tc) eines mittleren Abschnitts (10c) der Befestigungsschicht (10) die folgenden Formeln (1), (2) und (3) erfüllen,

$$(1)\ Ta < Tc$$

$$(2)\ Tb < Tc$$

$$(3)\ Ta/Tb = 0{,}25\ \text{bis}\ 4{,}00,$$

**dadurch gekennzeichnet, dass**
die Dicken (Ta, Tb) der zu den Enden benachbarten Abschnitte (10a, 10b) der Befestigungsschicht 10 0, 10 bis 1,50 mm betragen und die Dicke (Tc) des mittleren Abschnitts (10c) 0,50 bis 2,50 mm beträgt, wobei die zu den Enden benachbarten Abschnitte (10a, 10b) und der mittlere Abschnitt (10c), wenn in einer Breite (W1) in der Reifenbreitenrichtung der Befestigungsschicht (10) von einem Ende (10ea) zu einem anderen Ende (10eb) eine Position, die k% der Breite (W1) entspricht, von dem einen Ende (10ea) aus als Tk definiert ist, die zu den Enden benachbarten Abschnitte (10a, 10b) der Befestigungsschicht (10) ein Abschnitt von T0 bis T25 bzw. ein Abschnitt von T75 bis T100 sind und der mittlere Abschnitt (10c) der Befestigungsschicht (10) ein Abschnitt von T25 bis T75 ist, und wobei
die Dicken (Ta, Tb) der zu den Enden benachbarten Abschnitte (10a, 10b) der Befestigungsschicht (10) die Mittelwerte der Dicken in Bereichen T0 bis T25 bzw. T75 bis T100 sind und die Dicke (Tc) des mittleren Abschnitts (10c) der Mittelwert der Dicken im Bereich T25 bis T75 ist.

2. Luftreifen (1) nach Anspruch 1, wobei die folgenden Formeln (1-1), (2-1) und (3-1) erfüllt sind,

$$(1\text{-}1)\ Ta/Tc = 0{,}10\ \text{bis}\ 0{,}70$$

$$(2\text{-}1)\ Tb/Tc = 0{,}10\ \text{bis}\ 0{,}70$$

$$(3\text{-}1)\ Ta/Tb = 0{,}50\ \text{bis}\ 2{,}00.$$

3. Luftreifen (1) nach Anspruch 1, wobei die folgenden Formeln (1-2), (2-2) und (3-2) erfüllt sind,

$$(1\text{-}2)\ Ta/Tc = 0{,}30\ \text{bis}\ 0{,}50$$

$$(2\text{-}2)\ Tb/Tc = 0{,}30\ \text{bis}\ 0{,}50$$

$$(3\text{-}2)\ Ta/Tb = 0{,}80\ \text{bis}\ 1{,}25.$$

**Revendications**

1. Pneumatique (1) comprenant un corps d'amortissement de son (9) fixé à une surface de cavité interne de pneumatique (2S) par une couche de fixation (10), dans lequel

une épaisseur de la couche de fixation (10) n'est pas uniforme et est constituée de manière appropriée dans une direction de largeur de pneumatique, améliorant ainsi la résistance au décollement du corps d'amortissement de son (9), dans lequel les épaisseurs (Ta, Tb) des parties adjacentes aux extrémités (10a, 10b) dans la direction de largeur de pneumatique de la couche de fixation (10) et une épaisseur (Tc) d'une partie centrale (10c) de la couche de fixation (10) satisfont les formules suivantes (1), (2) et (3),

$$(1)\ Ta < Tc$$

$$(2)\ Tb < Tc$$

$$(3)\ Ta/Tb = 0{,}25\ \text{à}\ 4{,}00,$$

**caractérisé en ce**
**que** les épaisseurs (Ta, Tb) des parties adjacentes aux extrémités (10a, 10b) de la couche de fixation 10 sont de 0,10 à 1,50 mm et l'épaisseur (Tc) de la partie centrale (10c) est de 0,50 à 2,50 mm, dans lequel les parties adjacentes aux extrémités (10a, 10b) et la partie centrale (10c), lorsque, dans une largeur (W1) dans la direction de largeur de pneumatique de la couche de fixation (10) d'une extrémité (10ea) à une autre extrémité (10eb), une position, correspondant à k % de la largeur (W1), de l'une extrémité (10ea) est définie comme Tk, les parties adjacentes aux extrémités (10a, 10b) de la couche de fixation (10) sont une partie de T0 à T25 et une partie de T75 à T100, respectivement, et la partie centrale (10c) de la couche de fixation (10) sont une partie de T25 à T75 et dans lequel les épaisseurs (Ta, Tb) des parties adjacentes aux extrémités (10a, 10b) sont les moyennes des épaisseurs dans les plages T0 à T25 et T75 à T100, respectivement et l'épaisseur (Tc) de la partie centrale (10c) est la moyenne des épaisseurs dans la plage T25 à T75.

2. Pneumatique (1) selon la revendication 1, dans lequel les formules suivantes (1-1), (2-1) et (3-1) sont satisfaites,

$$(1\text{-}1)\ Ta/Tc = 0{,}10\ \text{à}\ 0{,}70$$

$$(2\text{-}1)\ Tb/Tc = 0{,}10\ \text{à}\ 0{,}70$$

$$(3\text{-}1)\ Ta/Tb = 0{,}50\ \text{à}\ 2{,}00.$$

3. Pneumatique (1) selon la revendication 1, dans lequel les formules suivantes (1-2), (2-2) et (3-2) sont satisfaites,

$$(1\text{-}2)\ Ta/Tc = 0{,}30\ \text{à}\ 0{,}50$$

$$(2\text{-}2)\ Tb/Tc = 0{,}30\ \text{à}\ 0{,}50$$

$$(3\text{-}2)\ Ta/Tb = 0{,}80\ \text{à}\ 1{,}25.$$

Fig. 1

Fig. 2

Fig. 3

Fig. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2003103989 A
- JP 2003063208 A
- DE 102016212473 A1
- WO 2017163219 A1
- DE 102014206009 A1
- WO 2017170154 A1
- JP 2016043824 A